# EUROPEAN PATENT APPLICATION

(11) **EP 3 923 521 A1**
(43) Date of publication of application: **15.12.2021**
(21) Application number: 19914561.6
(22) Date of filing: 27.12.2019
(51) Int. Cl.: H04L 12/28

(54) **PACKET COMMUNICATION SYSTEM, AND INFRASTRUCTURE SYSTEM, BUILDING AUTOMATION SYSTEM, AND FACTORY AUTOMATION SYSTEM USING PACKET COMMUNICATION SYSTEM**

(30) Priority: 05.02.2019 JP 2019018492; 05.02.2019 JP 2019018493; 05.02.2019 JP 2019018494
(60) Divisional application: 21196746.8
(71) Applicant: Step Technica Co., Ltd., Iruma-shi, Saitama, 358-0011 (JP)
(72) Inventor: MUGITANI, Tomihiro, Iruma City, Saitama 358-0011 (JP); NAKAJIMA, Tatsuhiko, Iruma City, Saitama 358-0011 (JP)
(74) Representative: Kador & Partner PartG mbB
(86) International application number: PCT/JP2019/051523
(87) International publication number: WO 2020/162084

(57) **Abstract**

Provided is a packet communication system adopting a multi-drop method capable of performing high-speed communication even in a system such as infrastructure, factory automation, or building automation.

A first terminal apparatus 300A connected to a first control object 400A, a second terminal apparatus 300B connected to a second control object 400B, and a central apparatus 200 that inputs information output from the first control object 400A and outputs an instruction based on the information to the second control object 400B are interconnected by multi-drop, and the second terminal apparatus 300B executes, when predetermined information is output from the first terminal apparatus 300A, processing based on the information without waiting for an instruction from the central apparatus 200.

## Description

### Technical Field

The present invention relates to a packet communication system, an infrastructure system using the same, a building automation system, and a factory automation system, and particularly, to a multi-drop connected packet communication system, an infrastructure system using the same, a building automation system, and a factory automation system.

### Background Art

Patent Literature 1 discloses an electronic wiring system by automatic communication by the present applicant. This electronic wiring system has a configuration in which an integrated circuit (IC) central apparatus having a shared memory is provided on a control center side, an IC terminal apparatus having an input/output port and a transmission/reception circuit is connected to each control object (device) side, and the central apparatus and each terminal apparatus are connected by a multi-drop method through a digital communication line (communication cable), and data exchange of a command packet and a response packet is performed at high speed by a full duplex method via the shared memory without a protocol by a program. According to this electronic wiring system, it is possible to perform high-speed data communication with a simple configuration, easy development and maintenance, and low cost by wiring between a control center having a microprocessor and a plurality of control objects dispersedly arranged without having a microprocessor.

### Citation List

### Patent Literature

Patent Literature 1: JP 9-326808 A

### Summary of Invention

### Technical Problem

Since the digital electronic wiring system described in Patent Literature 1 has many advantages, there is a demand for application from various fields. For example, there are application requests from the fields of infrastructure systems, factory automation systems, and building automation systems.

On the other hand, when the digital electronic wiring system described in Patent Literature 1 is intended to be applied to each field as it is, there is a slight disadvantage, and it has been found as a result of examination that addition of new functions and means is made more suitable for each field than application as it is.

Therefore, an object of the present invention is to provide an improved packet communication system that can be suitably used in systems such as infrastructure, factory automation, and building automation.

### Solution to Problem

In order to solve the above problems, the present invention relates to a device, wherein
a first terminal apparatus connected to a first control object,
a second terminal apparatus connected to a second control object, and
a central apparatus that inputs information output from the first control object and outputs an instruction based on the information to the second control object are interconnected by multi-drop, and
the second terminal apparatus executes, when predetermined information is transmitted from the first terminal apparatus, processing based on the information without waiting for an instruction from the central apparatus.

The predetermined information may include any one of fire detection information, falling information, and emergency stop.

Further, when receiving an instruction from the central apparatus after executing processing based on predetermined information transmitted from the first terminal apparatus, the second terminal apparatus may return to the central apparatus that the processing based on the information has been executed.

Further, the present invention provides a packet communication system in which devices including a central apparatus and a plurality of terminal apparatuses are connected to each other in a multi-drop manner, the packet communication system including:
a storage unit that stores a copy of setting information set in each of the devices;
a detection unit that detects that any one of the devices is replaced; and
a setting unit that sets, based on the copy of the setting information of each of the devices before replacement stored in the storage unit when the detection unit detects replacement of any one of the devices, the setting information in the device after replacement.

Note that the storage unit and/or the detection unit may be provided in at least one of the central apparatus and the terminal apparatuses.

Further, the setting information may include at least one of a control program for a control object connected to each of the terminal apparatuses, information capable of specifying each of the devices, log information of past operation of each of the devices, and log information of past operation of the control object.

Further, the device after replacement can include a control suppression unit that performs control so as not to start outputting information to the control object until setting information is set by the setting unit.

It is also possible to include a reading unit that reads the setting information stored in the storage unit.

Further, the present invention provides a packet communication system in which N central apparatuses and M terminal apparatuses are connected to each other in a multi-drop manner on a communication cable, wherein
some of the N central apparatuses and the M terminal apparatuses include:
an encoding unit that encodes information included in a payload in a packet to be transmitted by using an encoding key;
a decoding unit that decodes encoded information included in a payload in a received packet by using a decoding key; and
a key management unit that generates and updates an encoding key and a decoding key used in the encoding unit and the decoding unit; wherein,
a device newly connected to the communication cable comprises a request unit that requests an encoding key and a decoding key that are latest, updated by the key management unit.

Note that, in a case where a destination of a received packet includes an address assigned to the newly connected device, the request unit can request an encoding key and a decoding key that are latest when transmitting a packet responding to the packet.

Furthermore, in a case where a plurality of groups to which some of the devices belong is generated, encoding and decoding can be performed with different encoding keys and decoding keys for each of the groups.

Further, the infrastructure system, the building automation system, or the factory automation system of the present invention includes the above-described packet communication system.

### Brief Description of Drawings

Fig. 1 is a schematic explanatory diagram of a packet communication system of the present invention.
Fig. 2A is a block diagram illustrating a schematic configuration of a central apparatus 200 illustrated in Fig. 1.
Fig. 2B is a block diagram illustrating a schematic configuration of a terminal apparatus 300C illustrated in Fig. 1 and a fire detection sensor 400C connected to the terminal apparatus 300C.
Fig. 2C is a block diagram illustrating a schematic configuration of a terminal apparatus 300D illustrated in Fig. 1 and a fire alarm 400D connected to the terminal apparatus 300D.
Fig. 3 is a timing chart for describing operation of the packet communication system illustrated in Fig. 1.
Fig. 4A is a block diagram illustrating a schematic configuration of a central apparatus 200 according to a second embodiment of the present invention.
Fig. 4B is a block diagram illustrating a schematic configuration of a terminal apparatus 300 according to the second embodiment of the present invention.
Fig. 5 is a block diagram illustrating a schematic configuration of a packet communication system according to a third embodiment of the present invention.
Fig. 6A is a block diagram illustrating a schematic configuration of a central apparatus 200 illustrated in Fig. 5.
Fig. 6B is a block diagram illustrating a schematic configuration of a terminal apparatus 300 illustrated in Fig. 5.
Fig. 7 is an explanatory diagram of an infrastructure system in a first example of the present invention.
Fig. 8 is an explanatory diagram of a factory automation system in a second example of the present invention.
Fig. 9 is an explanatory diagram of a building automation system in a third example of the present invention.

### Reference Signs List

- 100: communication cable
- 200, 200A to 200D: central apparatus
- 210: communication unit
- 220: generation unit
- 230: processing unit
- 240: encoding unit
- 250: decoding unit
- 260: key management unit
- 270: request unit
- 300, 300A to 300D: terminal apparatus
- 310: communication unit
- 320: generation unit
- 330: processing unit
- 340: encoding unit
- 350: decoding unit
- 360: key management unit
- 370: request unit
- 400: device

### Description of Embodiments

Hereinafter, embodiments of the present invention will be described with reference to the drawings.

### <Description of Outline of Packet Communication System of Present Invention>

Since the packet communication system of the present invention is completely different from so-called Ethernet in which computers are connected to each other by a LAN cable on a one-to-one basis and perform communication according to a TCP/IP protocol, an outline of the packet communication system of the present invention will be described first.

The packet communication system of the present invention is configured such that N central apparatuses and M terminal apparatuses are multidrop-connected by a communication cable. As described above, since the packet communication system of the present invention is on the premise of an N-to-M connection, the packet communication system is largely different in configuration from Ethernet that can make only a one-to-one connection. Here, N and M are 1 or more, and N = M is also included, but typically, a 1-to-M connection is often adopted.

Here, in the case of the N-to-M connection in multidrop, unlike the case of the one-to-one connection in Ethernet, it is necessary to avoid a plurality of packets transmitted through the communication cable from colliding with each other. The method for this purpose is roughly divided into the following three methods.
(1) A method that is widely adopted in general, and in which a packet transmission time is sequentially instructed to all terminal apparatuses by a central apparatus.
(2) A method of setting in advance a packet transmission schedule in all central apparatuses and terminal apparatuses, which will be mainly described below in the present specification.
(3) A method obtained by combining the methods (1) and (2).

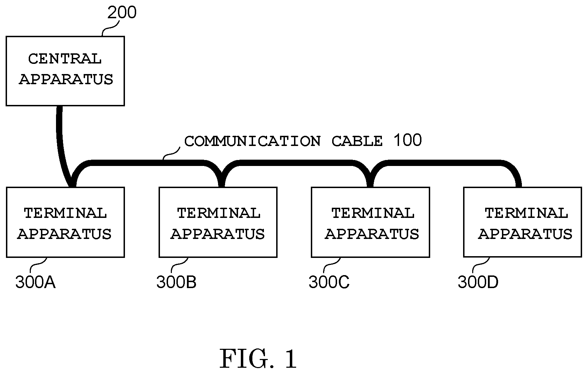

Fig. 1 is a schematic explanatory diagram of the packet communication system of the present invention. For easy understanding, Fig. 1 illustrates a state of "one-to four connection" in which one central apparatus 200 and four terminal apparatuses 300A to 300D are multidrop-connected by a communication cable 100, such as N = 1 and M = 4, as typically illustrated in JP 9-326808 A as Patent Literature 1 which is incorporated herein by reference. Note that, hereinafter, the terminal apparatuses 300A to 300D are collectively referred to as "terminal apparatus 300".

The packet communication system illustrated in Fig. 1 can adopt both a full-duplex communication system and a half-duplex communication system, but in general, the order of transmission and reception of packets between the central apparatus 200 and the terminal apparatus 300 is the same in any of these systems. That is, in the packet communication system as a whole, the central apparatus 200
(1) transmits and receives packets to and from the terminal apparatus 300A in one round trip,
(2) transmits and receives packets to and from the terminal apparatus 300B in one round trip,
(3) transmits and receives packets to and from the terminal apparatus 300C in one round trip, and
(4) transmits and receives packets to and from the terminal apparatus 300D in one round trip.

More specifically, in the case of the half-duplex communication system, the central apparatus 200
(1-1) transmits packets intended for the terminal apparatus 300A,
(1-2) thus receives packets from the terminal apparatus 300A,
(2-1) transmits packets intended for the terminal apparatus 300B,
(2-2) thus receives packets from the terminal apparatus 300B,
(3-1) transmits packets intended for the terminal apparatus 300C,
(3-2) thus receives packets from the terminal apparatus 300C,
(4-1) transmits packets intended for the terminal apparatus 300D, and
(4-2) thus receives packets from the terminal apparatus 300D.

In this case, the terminal apparatus 300 normally receives all the packets transmitted through the communication cable 100. Here, the packets include both a packet transmitted from the central apparatus 200 and a packet transmitted from another terminal apparatus 300.

Then, the terminal apparatus 300 captures only packets transmitted at the timing when packets for the terminal apparatus 300 are transmitted among all the packets received once, and discards packets transmitted at another timing.

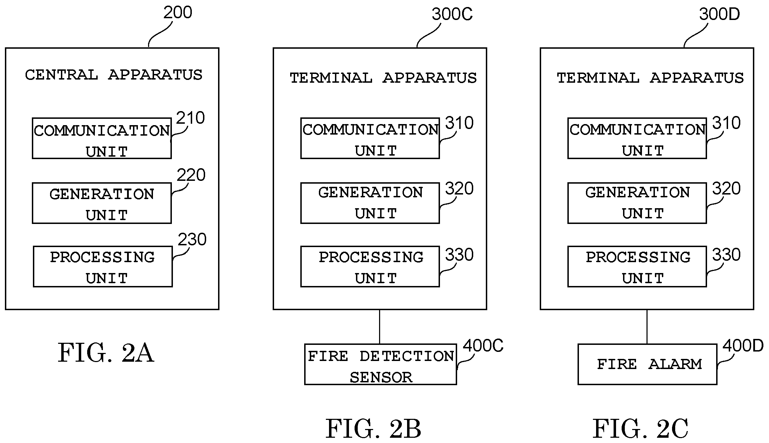

As an example, the terminal apparatus 300C temporarily receives packets transmitted from the central apparatus 200 in the above period (1-1), but the period (1-1) is the timing when packets for the terminal apparatus 300A are transmitted and is not the timing when packets for the terminal apparatus 300C are transmitted (the timing when packets for the terminal apparatus 300C are transmitted is the period (3-1)). Consequently, in the terminal apparatus 300C, the packets are discarded by a processing unit 330 (Fig. 2).

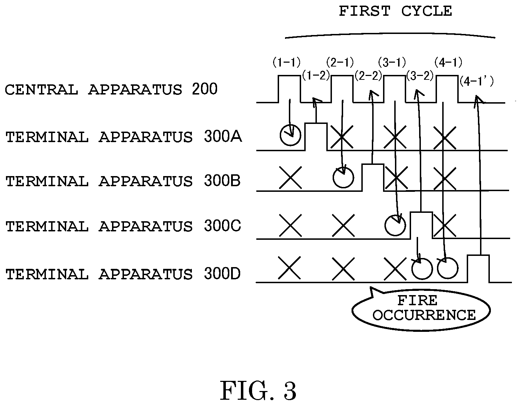

In the present specification, the period required for making a round of the above (1-1) to (4-2) is referred to as "certain period". Typically, the certain period can be appropriately set by a system design. However, as will be described later with reference to Fig. 3, typically, the response to the packet transmitted from the central apparatus 200 to the terminal apparatus 300A is immediately included in the packet transmitted from the terminal apparatus 300A to the central apparatus 200 and returned within the same cycle.

On the other hand, in the case of the full-duplex communication system, the downlink through which packets from the central apparatus 200 to the terminal apparatus 300 are transmitted and the uplink through which packets from the terminal apparatus 300 to the central apparatus 200 are transmitted are separately provided. Consequently, for example, paired periods can be combined into one set, such as a set of the period (2-1) and the period (1-2) of a fourth cycle, a set of the period (3-1) and the period (2-2) of the fourth cycle, a set of the period (4-1) and the period (3-2) of the fourth cycle, and a set of the period (1-1) of a fifth cycle and the period (4-2) of the fourth cycle.

That is, in the case of the full-duplex communication system, for example, the period in which packets are transmitted from the central apparatus 200 to the terminal apparatus 300B and the period in which packets are transmitted from the terminal apparatus 300A to the central apparatus 200 can be matched with each other. Consequently, the length of "certain period" in the case of the full-duplex communication system is about half the length of "certain period" in the case of the half-duplex communication system, when a comparison is made in the case where the system configuration is implemented under the same conditions.

Here, the header of a packet may include the destination assigned to the transmission destination of the packet, but required communication can be performed without including the destination. Note that, in a case where the destination is included in the header, if the terminal apparatus 300 confirms the destination of the packet in the header of the received packet and determines that the packet is a packet addressed to the terminal apparatus 300, the terminal apparatus 300 captures the packet and performs processing according to the information included in the payload of the packet, and on the other hand, if the terminal apparatus 300 determines that the packet is not a packet addressed to the terminal apparatus 300, the terminal apparatus 300 can discard the packet.

On the other hand, in a case where the destination is not included in the header, it is necessary to fixedly determine in advance each of the above periods (1-1) to (4-2), that is, a period in which the central apparatus 200 and the terminal apparatus 300 can transmit packets from the central apparatus 200 and the terminal apparatus 300, and to have a common time schedule so that it is possible to determine which period of (1-1) to (4-2) the central apparatus 200 and the terminal apparatus 300 are currently in.

As a result, even if the destination of the packet is not included in the header of the received packet, it is possible to determine whether or not the packet is addressed to the device itself on the basis of the timing of receiving the packet, and thus, it is possible to selectively perform either capturing or discarding of the packet according to the timing.

To make sure of that, the periods (1-1), (2-1), (3-1), and (4-1) are set as periods in which only the central apparatus 200 can transmit packets. In addition, the period (1-2) is set as a period in which only the terminal apparatus 300A can transmit packets, the period (2-2) is set as a period in which only the terminal apparatus 300B can transmit packets, the period (3-2) is set as a period in which only the terminal apparatus 300C can transmit packets, and the period (4-2) is set as a period in which only the terminal apparatus 300D can transmit packets. Note that, it is essential for each of the periods (1-1) to (4-2) to have a minimum length required for packets to be reliably received at a packet transmission destination.

As a result, for example, even if the terminal apparatus 300 receives packets transmitted from the central apparatus 200 in the period (1-1), only the terminal apparatus 300A can capture the packets, and the terminal apparatuses 300B to 300D can discard the packets.

It should be noted that, in the packet communication system of the present invention, the central apparatus 200 may function as the terminal apparatus 300 under certain conditions, and conversely, the terminal apparatus 300 may function as the central apparatus 200 under certain conditions.

Based on the above points, a packet communication system according to first to third embodiments of the present invention will be described below, but each of the following will be described.
- In the first embodiment, it is possible to immediately issue an alarm or the like when an emergency such as a fire occurs.
- In the second embodiment, various settings of a terminal apparatus 300 and the packet communication system can be made without manual intervention in a case where the terminal apparatus 300 needs to be repaired, replaced, or added.
- In the third embodiment, confidential information can be communicated between a central apparatus 200 and the terminal apparatus 300, and the confidential information can be communicated even in the situation of the second embodiment.

### (First Embodiment)

### <Description of Overall Configuration of Packet Communication System>

The description returns to Fig. 1 again. The central apparatus 200 transmits information related to a device (a control object) connected to the terminal apparatus 300 to the terminal apparatus 300, and in response thereto, receives information related to the device transmitted from the terminal apparatus 300.

Examples of the device herein include various types of sensors, lamps, motors, solenoids, and the like. In these examples, the central apparatus 200 may transmit packets including information instructing the terminal apparatus 300 to acquire sensor results from various types of sensors and reply to the sensors, or may transmit packets including information instructing the terminal apparatus 300 to switch the amount of light of the lamp, the rotation speed of the motor, and the opening and closing of the solenoid.

Note that examples of various sensors in a case of the present embodiment include a fire detection sensor installed in a factory, a building, or the like as a preferable example in a building automation field, a fall prevention sensor on a railway track installed on a platform of a railway station as a preferable example in an infrastructure field, and an operation stop sensor of mechanical equipment installed in a factory or the like as a preferable example in a factory automation field.

Here, a case where a general multi-drop connected packet communication system is directly applied to a fire alarm system including a fire detection sensor will be considered. A person skilled in the art disposes a fire detection sensor and a terminal apparatus 300C connected thereto in a factory, and disposes a fire-alarm device and a terminal apparatus 300D connected thereto in an office. Then, when a fire occurs in the factory and is detected by the fire detection sensor, it is possible to notify an administrator in the office away from the factory of the fire, if a packet communication system stores control programs such as to:
(1) input fire detection information output from the fire detection sensor to the terminal apparatus 300C;
(2) transmit the fire detection information input by the terminal apparatus 300C to a central apparatus 200;
(3) transmit an alarm issuance instruction based on the fire detection information received by the central apparatus 200 to the terminal apparatus 300D; and
(4) output a fire warning sound from an alarm device in accordance with the alarm issuance instruction received by the terminal apparatus 300D.

However, if the central apparatus 200 is in a high-load state, for example, by processing enormous information from a terminal apparatus 300A when fire detection information is transmitted from the terminal apparatus 300C, an alarm issuance instruction may not be immediately transmitted from the central apparatus 200 to the terminal apparatus 300D.

In addition, in a case where an untimely fire occurs in a state where the central apparatus 200 is stopped for some reason such as during failure or maintenance, as a result, the central apparatus 200 may not receive the fire detection information from the terminal apparatus 300C or may get into a situation in which an alarm issuance instruction cannot be transmitted to the terminal apparatus 300D even if the fire detection information from the terminal apparatus 300C can be received.

The present embodiment provides a packet communication system that avoids a situation in which an alarm is not issued immediately when an emergency situation occurs as described above, and further adopts a method of setting a packet transmission schedule in the central apparatus 200 and the terminal apparatus 300 in advance instead of a method of sequentially instructing transmission times of packets to all terminal apparatuses on the initiative of a central apparatus so that an alarm is issued immediately even when an untimely fire occurs while the central apparatus 200 is stopped.

### <Description of Configurations of Central apparatus 200 and Terminal apparatus 300>

Fig. 2 is a block diagram illustrating a schematic configuration of the central apparatus 200 and the terminal apparatuses 300C to 300D illustrated in Fig. 1, a fire detection sensor 400C connected to the terminal apparatus 300C, and a fire alarm 400D connected to the terminal apparatus 300D. Here, for simplification of description, only the terminal apparatuses 300C to 300D among the terminal apparatus 300 are illustrated.

The central apparatus 200 illustrated in Fig. 2A includes a communication unit 210 that performs packet communication with terminal apparatuses 300A to 300D via a communication cable 100, a generation unit 220 that generates a packet to be transmitted by the communication unit 210, and a processing unit 230 that performs processing according to information included in a payload of a packet received by the communication unit 210.

Note that, whether the generation unit 220 adopts a full-duplex communication scheme or a half-duplex communication scheme, it is necessary to include, in a packet, unique information uniquely indicating that the central apparatus 200 is a transmission source and assigned to the central apparatus 200 (for example, an address uniquely assigned to the central apparatus 200) in order to realize necessary communication in the present embodiment.

Alternatively, the necessary communication can be achieved by, instead of including the unique information in the packet, designating the transmission source and the transmission destination of the packet on the basis of the time schedule of the entire system.

Furthermore, for example, some of the communication unit 210, the generation unit 220, and the processing unit 230 can be configured as a so-called communication unit, can be configured with general-purpose hardware such as a CPU and a memory, or can be configured with a dedicated LSI such as a state machine.

Similarly to the configuration of the central apparatus 200, the configurations of the terminal apparatuses 300C to 300D illustrated in Figs. 2B to 2C include a communication unit 310 that performs packet communication with the central apparatus 200 via the communication cable 100, a generation unit 320 that generates a packet to be transmitted by the communication unit 310, and a processing unit 330 that performs processing according to information included in a payload of a packet to be received by the communication unit 310.

The fire detection sensor 400C illustrated in Fig. 2B is installed, for example, on a ceiling, a wall, or a periphery of a high-temperature mechanical equipment in a factory. It is preferable to install a sprinkler facility accompanying the fire detection sensor 400C and to spray water for extinguishing a fire from the sprinkler facility separately from transmitting fire detection information to the central apparatus 200.

The fire alarm 400D illustrated in Fig. 2C is installed in, for example, a factory or an office adjacent thereto, and outputs a fire warning sound based on fire detection information or notifies a fire department such as a nearest fire department that a fire has occurred.

Here, the packet communication system according to the present embodiment is characterized in that the processing unit 330 of the terminal apparatus 300D performs the following pieces of processing.

That is, as described above, the terminal apparatus 300D temporarily receives all the packets transmitted from the central apparatus 200 or the other terminal apparatuses 300A to 300C via the communication cable 100 at a normal time. Then, from among those packets, only the packets transmitted at a timing when packets for the terminal apparatus 300D are transmitted are captured, and the packets transmitted at another timing are discarded.

However, in the present embodiment, in a case where a packet including the fire detection information is transmitted from the terminal apparatus 300C via the communication cable 100, even if the packet is not a packet transmitted at the timing when a packet for the terminal apparatus 300D is transmitted, the packet is captured, and processing such as outputting a fire warning sound is commanded to the fire alarm 400D.

To realize this, the processing unit 330 of the terminal apparatus 300D includes:
a capturing means for capturing at least a packet transmitted from the terminal apparatus 300C from among the packets received by the communication unit 310;
a determination means for determining whether fire detection information is included in a payload of a packet captured by the capturing means;
a command means for commanding processing such as causing the fire alarm 400D to output a fire warning sound when the determination means determines that a payload of a packet includes fire detection information; and
a discarding means for discarding a packet when the determination means determines that a payload of a packet does not include fire detection information.

Note that the terminal apparatus 300C may include, instead of transmitting a packet including fire detection information in a payload, specific information indicating the fact in a header. In this case, since the determination means can determine that the fire detection information is included based on the information in the header, the command means only needs to command processing such as causing the fire alarm 400D to output a fire warning sound.

In short, when the fire detection information is transmitted from the terminal apparatus 300C, the terminal apparatus 300D executes processing based on the fire detection information without waiting for an instruction from the central apparatus 200. This processing may be realized by a program or may be realized by a state machine.

In this way, when the payload or the like of a received packet includes fire detection information, the processing unit 330 of the terminal apparatus 300D can command the fire alarm 400D to output a fire warning sound regardless of whether the transmission source of the packet is the central apparatus 200 or the terminal apparatus 300C.

However, since it is not necessary to issue an identical command in a superimposed manner by the packets of both the terminal apparatus 300C and the central apparatus 200, once the command is executed, the execution of operation following the instruction may be suppressed until the alarm is reset by a system administrator or the like.

### <Description of Operation of Packet Communication System>

Fig. 3 is a timing chart for describing operation of the packet communication system illustrated in Fig. 1. As illustrated in Fig. 3, a packet transmitted from the terminal apparatus 300C to which the fire detection sensor 400C is connected in a period (3-2) among periods (1-1) to (4-2) is also received by the terminal apparatus 300D. Note that Fig. 3 illustrates presence or absence of a packet transmission function in the central apparatus 200 and the terminal apparatus 300. Specifically, a period during which the packet transmission function is active is indicated at a high level, and a period during which the packet transmission function is passive is indicated at a low level.

The periods (1-1), (2-1), (3-1), and (4-1) are periods in which the packet transmission function is active only in the central apparatus 200. Similarly, for example, the period (1-2) is a period in which the packet transmission function is active only in the terminal apparatus 300A of the terminal apparatus 300.

In addition, in Fig. 3, "∘" or "×" is added in correspondence with the periods (1-1), (2-1), (3-1), and (4-1). "∘" indicates that the corresponding terminal apparatus 300 captures a packet and performs processing according to information included in a payload, and "×" indicates that a packet is discarded. Further, in Fig. 3, an arrow indicates a packet transmission source/transmission destination mainly in the case of "o".

Note that, in the description using Fig. 3, for clear distinction, a packet from the central apparatus 200 to the terminal apparatus 300 is referred to as "transmission packet", and a packet from the terminal apparatus 300 to the central apparatus 200 is referred to as "return packet".

Taking the period (1-1) as an example, the transmission packet transmitted from the central apparatus 200 to the terminal apparatus 300A is "o" in the terminal apparatus 300A because the processing unit 330 of the terminal apparatus 300A performs capturing processing, and is "×" in the terminal apparatuses 300B to 300D because the processing units 330 of the terminal apparatuses 300B to 300D perform discard processing.

As a result, in "arrow" attached to the transmission packet transmitted from the central apparatus 200 to the terminal apparatus 300A, the tip of the arrow is directed from the central apparatus 200 to the terminal apparatus 300A.

As described above, in the period (1-2), the period (2-2), the period (3-2), and the period (4-2), a return packet is transmitted from the terminal apparatus 300 to the central apparatus 200. Specifically, in a case where the terminal apparatus 300 performs necessary processing according to information included in a payload of a corresponding transmission packet, the return packet includes information regarding results of the processing, and the return packet is generated by the generation unit 320.

Again, for example, a return packet transmitted from the terminal apparatus 300A to the central apparatus 200 in the period (1-2) is received also in the terminal apparatuses 300B to 300D in the period (1-2), but for example, since a packet to be captured by the terminal apparatus 300B is a transmission packet from the central apparatus 200 in the period (2-1), the processing unit 330 of the terminal apparatus 300B can determine that it is not a packet addressed to the terminal apparatus 300B according to a difference in reception timing. Therefore, the terminal apparatus 300B performs discard processing on the return packet transmitted by the terminal apparatus 300A.

Similarly, for the terminal apparatus 300C, for example, the return packet transmitted from the terminal apparatus 300A to the central apparatus 200 in the period (1-2) is discarded, and since a packet to be captured by the terminal apparatus 300C is a transmission packet from the central apparatus 200 in the period (3-1), only this transmission packet is received and captured.

Then, at least the terminal apparatus 300C among the terminal apparatus 300 spontaneously transmits a return packet to the central apparatus 200 at a transmission timing of the period (3-2) even if a transmission packet transmitted from the central apparatus 200 cannot be received in the period (3-1).

In summary, in an example illustrated in Fig. 3, during the period (1-1) to the period (3-2), packet communication is performed between the central apparatus 200 and the terminal apparatuses 300A to 300C as follows. That is, in the terminal apparatuses 300A to 300C, when a transmission packet addressed to the terminal apparatuses 300A to 300C is transmitted from the central apparatus 200, the processing units 330 each capture the transmission packet and perform processing of transmitting a response packet corresponding to the transmission packet to the central apparatus 200.

On the other hand, operation of the terminal apparatus 300D is different from operations of the terminal apparatuses 300A to 300C. The terminal apparatus 300D discards a return packet transmitted from the terminal apparatus 300A to the central apparatus 200 in the period (1-2), for example. This point is the same as the cases of the terminal apparatuses 300A to 300C. However, the terminal apparatus 300D does not discard a return packet transmitted from the terminal apparatus 300C to the central apparatus 200 in the period (3-2).

In other words, in the present embodiment, a return packet transmitted from the terminal apparatus 300C in the period (3-2) is captured after being received not only by the central apparatus 200 but also by the terminal apparatus 300D. Accordingly, as described below, a configuration in which information based on the fire detection information by the fire detection sensor 400C can be received by the terminal apparatus 300D at an early stage is realized.

Note that, since the return packet transmitted from the terminal apparatus 300C in the period (3-2) is voluntary, even when the central apparatus 200 is stopped, the terminal apparatus 300D can receive the information based on the fire detection information by the fire detection sensor 400C.

Here, for example, it is assumed that a fire occurs in a factory and the fire detection sensor 400C detects the fire in the period (3-1). In this case, the detection result of the fire detection sensor 400C is output to the terminal apparatus 300C. Therefore, in the period (3-2), the "fire detection information" is included in the payload and the like of the return packet transmitted from the terminal apparatus 300C to the central apparatus 200 and the terminal apparatus 300D.

Therefore, the central apparatus 200 and the terminal apparatus 300D can grasp that a fire has occurred in the factory by receiving and capturing the return packet. In order to cause the fire alarm 400D to output a fire warning sound, the central apparatus 200 generates a transmission packet of which the payload includes information to that effect and transmits the transmission packet to the terminal apparatus 300D in the period (4-1). Prior to this, the terminal apparatus 300D has already received and captured a return packet including the "fire detection information" transmitted from the terminal apparatus 300C in the period (3-2). Therefore, it is possible to command the fire alarm 400D to perform necessary processing such as outputting a fire warning sound before processing the information of the transmission packet from the central apparatus 200.

Note that, when receiving the transmission packet from the central apparatus 200 in the period (4-1), the terminal apparatus 300D generates a return packet corresponding to the transmission packet and transmits the return packet to the central apparatus 200 in the period (4-1'), and the return packet may include information indicating that a packet including information indicating an instruction to output a fire warning sound has already been received from the central apparatus 200 and that a corresponding processing has been commanded to be performed.

As described above, the present embodiment is characterized in that a fire warning sound can be output from the terminal apparatus 300D at an early stage based on the fire information transmitted by the terminal apparatus 300C regardless of whether the central apparatus 200 is operating at a normal time.

As described above, the packet communication system according to the present embodiment can generate a great effect of being able to immediately issue a fire warning regardless of whether the central apparatus 200 is in a high-load state, or is stopped, by only performing a simple and slight setting work on the terminal apparatus 300D connected to a fire alarm among the terminal apparatus 300.

As described above, in the present embodiment, the example in which the packet communication system is applied to a fire notification system has been described. However, the packet communication system can be suitably applied to a system in which emergency warning needs to be issued, such as a fall prevention system and an emergency stop system, in addition to fire notification.

### (Second Embodiment)

### <Outline and Description of Configuration>

The packet communication system according to the present embodiment enables various settings of the terminal apparatus 300 and the packet communication system without manual intervention in a case where repair, replacement, or expansion of the central apparatus 2000 and the terminal apparatus 300 is required.

In the packet communication system in which the central apparatus 200 and the terminal apparatus 300 are connected to each other in a multi-drop manner as illustrated in Fig. 1, for example, when any one of the terminal apparatus 300 fails or the like, it is necessary to replace the terminal apparatus with a new terminal apparatus that can perform equivalent operation. In this case, normally, a system administrator is required to set various types of information of the terminal apparatus before replacement in the terminal apparatus after replacement and then connect the terminal apparatus after replacement to the communication cable 100.

However, in this case, it cannot be said that there is no possibility that incompleteness such as setting errors or setting omissions occurs by a system administrator, and there is a problem that the packet communication system may malfunction when such incompleteness occurs.

In addition, for example, it is considered that a system administrator may record information in an initial setting of the packet communication system and manage the information in order to perform the setting. Even in this case, it cannot be said that there is no possibility that the setting information record is lost or erased. In a case where the setting information record is lost or the like, in the worst case, system design for the entire packet communication system has to be performed from the beginning.

In the present embodiment, in order to prevent such a problem from occurring, when a terminal apparatus is replaced with a new terminal apparatus, the setting information can be set in the terminal apparatus after the replacement without a setting work by a system administrator or without recording and managing the setting information by a system administrator.

Similarly, in the present embodiment, even in a case where a terminal apparatus is detached from the communication cable 100 for repair and is connected to the communication cable 100 again after repair, or in a case where a new terminal apparatus is connected to the communication cable 100 for expansion, the setting information is set in the terminal apparatus after replacement without a setting work by a system administrator or without recording and managing the setting information by a system administrator.

### <Description of Configurations of Central apparatus 200 and Terminal apparatus 300>

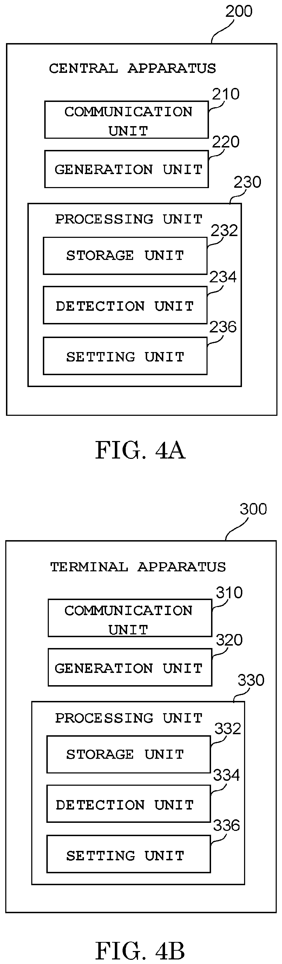

Fig. 4 is a block diagram illustrating a schematic configuration of the central apparatus 200 and the terminal apparatus 300 according to a second embodiment of the present invention. Fig. 4A illustrates a configuration of the central apparatus 200, and Fig. 4B illustrates a configuration of the terminal apparatus 300.

In Fig. 4A, in addition to the communication unit 210, the generation unit 220, and the processing unit 230 described above, the processing unit 230 includes a storage unit 232 that stores setting information set for each of the terminal apparatus 300, a detection unit 234 that detects that a new terminal apparatus is connected to the communication cable 100, and a setting unit 236 that sets the setting information stored in the storage unit 232 to a new terminal apparatus in a case where detection is performed by the detection unit 234.

Here, the new terminal apparatus includes:
(1) a terminal apparatus after repair, which has been used so far and is repaired;
(2) another terminal apparatus after replacement, with which a terminal apparatus that has been used so far is replaced; and
(3) a terminal apparatus to be added to the packet communication system for the first time.

In cases of (1) and (2), it is only necessary that the setting unit 236 set setting information of terminal apparatuses before repair and before replacement stored in the storage unit 232 to the terminal apparatuses after repair and after replacement. On the other hand, in a case of (3), it is only necessary that information of a terminal apparatus to be added be stored in the storage unit 232 before the addition by a system designer or a system administrator and set in the terminal apparatus to be added based on the setting information.

Here, the setting information set in each of the terminal apparatus 300 includes various types of information set in each of the terminal apparatus 300 by a system designer or a system administrator. Examples of this type of information include:
(1) a control program for a control object (fire detection sensor, fire alarm, etc.) connected to each of the terminal apparatus 300,
(2) information capable of specifying each of the terminal apparatus 300 (for example, an address uniquely assigned to each of the terminal apparatus 300),
(3) log information of past operation of each of the terminal apparatus 300, and
(4) log information of past operation of the control object.

The terminal apparatus 300 illustrated in Fig. 4B can have a configuration similar to an internal configuration of the central apparatus 200 illustrated in Fig. 4A, for example. Therefore, the terminal apparatus 300 can include, for example, in addition to the communication unit 310, the generation unit 320, and the processing unit 330, a storage unit 332 corresponding to the storage unit 232, a detection unit 334 corresponding to the detection unit 234, and a setting unit 336 corresponding to the setting unit 236 in the processing unit 330.

Describing in advance, the storage unit 232 and the storage unit 332, the detection unit 234 and the detection unit 334, and the setting unit 236 and the setting unit 336, which are parts unique to the central apparatus 200 and the terminal apparatus 300 according to the present embodiment, are not necessarily provided in all of the central apparatus 200 and the terminal apparatus 300.

That is, for example, only the central apparatus 200 may have the configuration illustrated in Fig. 4A, and the terminal apparatus 300 may have the configuration illustrated in Fig. 2B described in the first embodiment. Conversely, the central apparatus 200 may have the configuration illustrated in Fig. 2A described in the first embodiment, and only the terminal apparatus 300 may have the configuration illustrated in Fig. 4B.

Furthermore, all of the terminal apparatus 300 do not need to have the configuration illustrated in Fig. 4B, and for example, only one or two specific terminal apparatuses may have the configuration illustrated in Fig. 4B, and the other terminal apparatuses may have the configuration illustrated in Fig. 2B described in the first embodiment.

In addition, both of the central apparatus 200 and the terminal apparatus 300 may have the configuration illustrated in Figs. 2A and 2B described in the first embodiment, and one or two or more dedicated devices having a configuration in which a part that transmits and receives packets is added to parts unique to the central apparatus 200 and the terminal apparatus 300 according to the present embodiment, similarly to the communication unit, may be separately connected to the communication cable 100.

Furthermore, for example, it is not necessary to provide the storage unit 232 or the storage unit 332 and the detection unit 234 or the detection unit 334 each in the central apparatus 200 or all of the terminal apparatus 300 or the dedicated devices. That is, for example, in a case where the configuration illustrated in Fig. 4B is adopted only for two terminal apparatuses 300A to 300B, only one of them, the terminal apparatus 300A may include the storage unit 332 and the like, and the other terminal apparatus 300B may not include the storage unit 332 and the like.

### <Description of Operation of Packet Communication System>

Next, operation of the packet communication system according to the present embodiment will be described by taking, as an example, a case where a terminal apparatus that has been used so far is replaced with a new terminal apparatus. Here, it is assumed that only the central apparatus 200 and the terminal apparatus 300A adopt the configurations illustrated in Figs. 4A and 4B, and the terminal apparatuses 300B to 300D adopt the configuration illustrated in Fig. 2B described in the first embodiment.

Note that the reason why the storage units 232 and 332, and the like are provided in two devices, that is, the central apparatus 200 and the terminal apparatus 300A is to enable, even when some trouble occurs in one of these devices, the other device to perform setting processing for a terminal apparatus after replacement.

In the case of the present embodiment, typically, before start of the operation of the packet communication system, setting information set for the central apparatus 200 and each of the terminal apparatuses 300 is stored in the storage unit 232 of the central apparatus 200 and the storage unit 332 of the terminal apparatus 300A by a system designer.

In this state, for example, it is assumed that a problem has been found in the terminal apparatus 300C and that it is necessary to replace the terminal apparatus 300C with a new terminal apparatus 300C'. In this case, in the packet communication system according to the present embodiment, the terminal apparatus 300C to be replaced can be removed from both the communication cable 100 and the control object by hot wire insertion/removal.

Furthermore, the new terminal apparatus 300C' can also be connected to the communication cable 100 and the control object due to hot wire insertion/removal. When the new terminal apparatus 300C' is connected to the communication cable 100, the detection unit 234 of the central apparatus 200 and the detection unit 334 of the terminal apparatus 300A detect that the new terminal apparatus 300C' is connected to the communication cable 100 by the following method.

Here, a method of detecting that the new terminal apparatus 300C' is connected to the communication cable 100 in the detection unit 234 of the central apparatus 200 will be described. First, the new terminal apparatus 300C' grasps a reception situation of the packet for at least one cycle transmitted through the communication cable 100.

In a case of this example, the new terminal apparatus 300C' can grasp that a return packet for the packet from the central apparatus 200 in the period (3-1) of Fig. 3 described above is not transmitted.

Therefore, the new terminal apparatus 300C' generates, in order to request to transmit a packet to the terminal apparatus 300C', a packet including this type of information in a payload by the generation unit 320, and transmits a setting information request packet to the central apparatus 200 in the non-transmission period (3-2) of the packet by the communication unit 310.

In the central apparatus 200, when the setting information request packet from the new terminal apparatus 300C' is received by the communication unit 210, the setting information request packet is output to the processing unit 230. In the processing unit 230, the detection unit 234 checks information included in the payload of the packet output from the communication unit 210. As a result, the processing unit 230 can grasp that the packet is the setting information request packet.

Therefore, the setting unit 236 appropriately reads various types of setting information stored in the storage unit 232, creates information to be included in the payload of the packet addressed to the new terminal apparatus 300C', and outputs the information to the generation unit 220. Here, in a case where the setting information to be read is relatively small and all of the information can be included in the payload of one packet, all of the information only needs to be read. On the other hand, if not, at least a part of the information set in the terminal apparatus 300C only needs to be read first, and then other setting information may be read as appropriate.

When the setting information output from the setting unit 236 is input, the generation unit 220 generates a setting information response packet by including the setting information in the payload, and outputs the setting information response packet to the communication unit 210. When the setting information response packet is input, the communication unit 210 transmits the setting information response packet to the new terminal apparatus 300C' in the period (3-1).

In the new terminal apparatus 300C', when the setting information response packet transmitted from the central apparatus 200 is received by the communication unit 310, the processing unit 330 sets setting information in the new terminal apparatus 300C' based on the information included in the payload of the setting information response packet. In this way, the new terminal apparatus 300C' can execute the operation of the packet communication system based on this setting information.

Next, a method of detecting that the new terminal apparatus 300C' is connected to the communication cable 100 in the detection unit 334 of the terminal apparatus 300A will be described. The operation until the new terminal apparatus 300C' transmits the setting information request packet to the central apparatus 200 in the period (3-2) is similar to a case of detection by the detection unit 234 of the central apparatus 200.

The setting information request packet is received not only by the central apparatus 200 but also by the terminal apparatus 300A. In the terminal apparatus 300A, during the period (3-2) from removal of the terminal apparatus 300C from the communication cable 100 to connection of the new terminal apparatus 300C' to the communication cable 100, it can be grasped that no packet is transmitted to the communication cable 100.

For this reason, in a case where the terminal apparatus 300A grasps that the packet has not been transmitted to the central apparatus 200 many times continuously in the period (3-2), a flag of waiting for the setting information request packet in the period (3-2) is turned on in the processing unit 330. Note that the terminal apparatus 300A turns off this flag with the transmission of the setting information response packet as a trigger.

Thereafter, when the new terminal apparatus 300C' is connected to the communication cable 100 and a setting information request packet is transmitted from the new terminal apparatus 300C', the terminal apparatus 300A receives the setting information request packet. Accordingly, since the terminal apparatus 300A can transmit the setting information response packet to the new terminal apparatus 300C', the setting information is set in the new terminal apparatus 300C'.

Note that the terminal apparatus 300 including the new terminal apparatus 300C' may include a control suppression unit that performs control so as not to start outputting information to the control object connected to the terminal apparatus 300 until the setting information is set by the setting unit 236 or the setting unit 336. The control suppression unit only needs to cancel the suppression upon completion of installation processing of the setting information.

As a result, even when a system administrator or the like who is unfamiliar with a setting work connects the terminal apparatus 300 to the communication cable 100 and a control object 400 before performing necessary setting on the terminal apparatus 300 prior to the operation of the packet communication system and starts the operation of the packet communication system, it is possible to avoid occurrence of a malfunction in the packet communication system.

In addition, the central apparatus 200 or the terminal apparatus 300 may include a reading unit that reads the setting information stored in the storage units 232 and 332. Specifically, this reading unit can include an external storage memory such as a universal serial bus (USB) memory or an SD card, and a slot to which the external storage memory is attached and which is connected to the storage unit. Although it seems very stochastically low, even if two devices are provided with the unique parts of the present embodiment, there is not without a possibility that both of the two devices fail or the like. Therefore, in the present embodiment, latest setting information stored in the storage units 232 and 332 can be read by the reading unit regularly or irregularly or according to a predetermined rule, and stored in a device or the like separated from the communication cable 100.

Note that, by providing the reading unit, the latest setting information stored in the storage units 232 and 332 can include the log information of the past operations of the control objects. Therefore, enabling reading of the log information has an effect of effective use of big data.

As described above, with the packet communication system according to the present embodiment, when a new terminal apparatus is connected to the communication cable 100, the setting information is set to the new terminal apparatus without a setting work by a system administrator or without recording and managing the setting information by a system administrator.

### (Third Embodiment)

### <Outline and Description of Configuration>

The packet communication system according to the present embodiment assigns an encoding key and a decoding key common to the central apparatus 200 and the terminal apparatus 300 in order to encrypt information to be communicated between the central apparatus 200 and the terminal apparatus 300. Then, as described in the second embodiment, even when a new terminal apparatus is connected to the communication cable 100, encoded information can be transmitted and received between the new terminal apparatus and the central apparatus 200 and the terminal apparatus 300 that are existing.

Unlike the packet communication system according to the present embodiment, in a case of a packet communication system in which one central apparatus and one terminal apparatus are connected in a peer-peer manner, a method of concealing information to be transmitted by encrypting and decoding the entire packet in order to conceal information to be communicated is known.

When this method is introduced into a packet communication system in which the N central apparatuses 200 and the M terminal apparatuses 300 are connected to one another in a multi-drop manner through the communication cable 100, N × M encoding keys and decoding keys need to be prepared. In this case, as the number of the central apparatus 200 and the terminal apparatus 300 increases, the number of encoding keys and decoding keys to be prepared also increases. In addition, setting of the encoding keys and the decoding keys for all of the central apparatus 200 and the terminal apparatus 300 is usually performed by a system administrator, but this work is not easy as the number of the central apparatus 200 and the terminal apparatus 300 is larger.

Furthermore, in recent years, in order to improve confidentiality of information, an encoding key and a decoding key are appropriately updated, such as a one-time password, which is also known. When this is incorporated into a packet communication system in which the N central apparatus 200 and the M terminal apparatuses 300 are connected to one another in a multi-drop manner through the communication cable 100, typically, the N × M encoding keys and decoding keys need to be updated in the entire packet communication system, for example, every minute. However, this applies a very high load to the packet communication system.

For this reason, it is conceivable that the number of encoding keys and decoding keys that need to be used in the entire packet communication system is, for example, only one set, and the encoding keys and the decoding keys are sequentially updated without increasing the load on the packet communication system to improve confidentiality.

However, in this case, when a new terminal apparatus is connected to the communication cable 100, since an encoding key and a decoding key that are latest are not assigned to the new terminal apparatus, the new terminal apparatus cannot decode encoded information from the central apparatus 200 and cannot execute processing according to the information.

In this case, in order to solve problems that occur when a new terminal apparatus is connected to the communication cable 100, a system administrator or the like needs to restart the packet communication system or the like to perform a troublesome work of re-assigning new common encoding keys and decoding keys to all of the new terminal apparatuses connected to the communication cable 100 and the central apparatus 200 and the terminal apparatus 300 that are existing, connected to the communication cable 100.

As described above, various studies have been made to divert the existing method to a multi-drop connected packet communication system, but all of them have some disadvantages. In the present embodiment, a packet communication system capable of transmitting and receiving encoded information without causing the above-described inconvenience will be described.

### <Description of Overall Configuration of Packet Communication System>

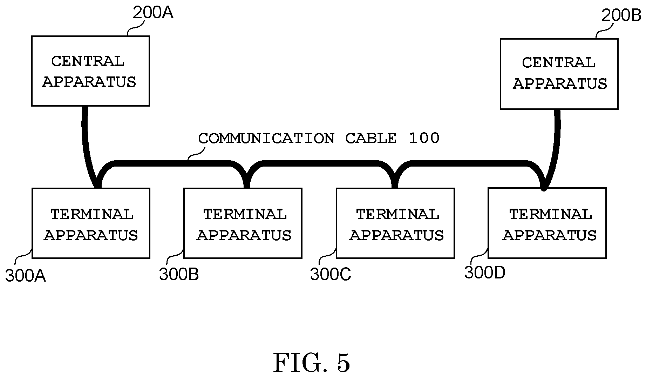

Fig. 5 is a block diagram illustrating a schematic configuration of a packet communication system according to a third embodiment of the present invention. The packet communication system illustrated in Fig. 5 is different from that illustrated in Fig. 1 in that one central apparatus 200 is changed to two central apparatuses 200A and 200B. In the present embodiment, the central apparatuses 200A and 200B are collectively referred to as central apparatus 200.

Here, for easy understanding, a "2-to-4 connection" packet communication system will be described in which two central apparatuses 200A to 200B and four terminal apparatuses 300A to 300D are installed. However, it should be noted that the number of the central apparatuses 200 and the terminal apparatuses 300 is not limited thereto.

Note that the central apparatus 200A and the central apparatus 200B can be synchronized with each other by being connected to each other, but in practice, the central apparatus 200A and the central apparatus 200B are often connected to host apparatuss (not illustrated) (in the first and second embodiments, the central apparatus 200 illustrated in Fig. 1 may be actually connected to a host apparatus (not illustrated)). In a case where the host apparatus is provided, the host apparatus outputs the same instruction to the central apparatus 200A and the central apparatus 200B. As a result, it is possible to achieve a configuration in which dual control of the packet communication system can be executed by the two central apparatuses 200.

Here, in the case of the packet communication system in which only one central apparatus 200 is installed as illustrated in Fig. 1, if the central apparatus 200 cannot operate due to a failure or the like, the entire system does not operate.

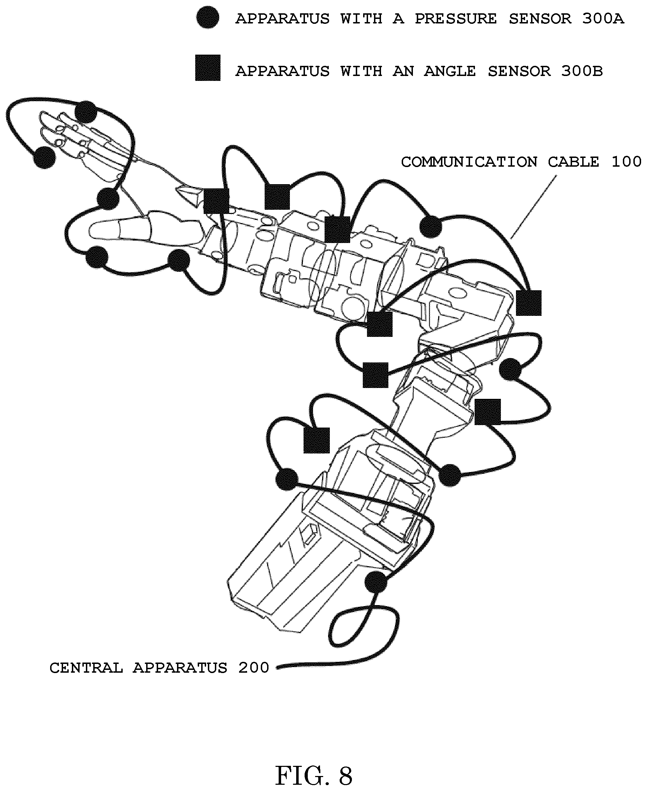

On the other hand, as illustrated in Fig. 8, in a case where two central apparatuses 200A to 200B are installed, even if the central apparatus 200A fails or the like, the central apparatus 200B can control the entire system as long as the central apparatus 200B does not accidentally fail or the like at this timing, so that a situation in which the entire system does not operate can be avoided.

As a cause in a case where all of the central apparatuses 200A to 200B fail at the same timing, typically, it is conceivable that a strong surge current flows simultaneously in the central apparatuses 200A to 200B. However, in order to prevent the packet communication system from stopping due to the cause, another central apparatus that is electrically disconnected from the communication cable 100 may be prepared and connected to a host apparatus, and if both of the central apparatuses 200A to 200B fail or the like, another central apparatus may be connected to the communication cable 100 to continue the packet communication.

As a cause of failure of both of the central apparatus 200 at an identical timing, it is typically considered that a strong surge current flows simultaneously to the central apparatuses 200A to 200B. In order to prevent the packet communication system from stopping due to this, another central apparatus electrically separated from the communication cable 100 may be prepared and connected to a host apparatus, and when both of the central apparatus 200 fail or the like, the another central apparatus may be connected to the communication cable 100 so that packet communication can be continued.

Here, as a specific method of this type of dual control, it is conceivable that a master-slave relationship is provided between the central apparatus 200A and the central apparatus 200B, and for example, only the central apparatus 200A controls operation of the packet communication system at a normal time, and the central apparatus 200B only performs processing such as holding a control history of the central apparatus 200A, and is not involved in the control of the operation of the packet communication system.

In this case, it can be said that it is not the normal time when a state in which a packet is not transmitted from the central apparatus 200A continues for a certain period of time. Therefore, if it is determined that the central apparatus 200A has failed or the like, it is possible to take over the control of the operation of the packet communication system based on the control history of the central apparatus 200A and an instruction from a host apparatus held by the central apparatus 200B until then.

Alternatively, without providing the master-slave relationship in the central apparatus 200, for example, both of these may control the entire system at a normal time. Note that, in this case, it is conceivable that inconvenience occurs due to each packet including an instruction of an identical content transmitted from each central apparatus 200 being captured by the terminal apparatus 300. Therefore, it is also a method not to execute processing according to information included in a packet received later under certain conditions.

### <Description of Configurations of Central apparatus 200 and Terminal apparatus 300>

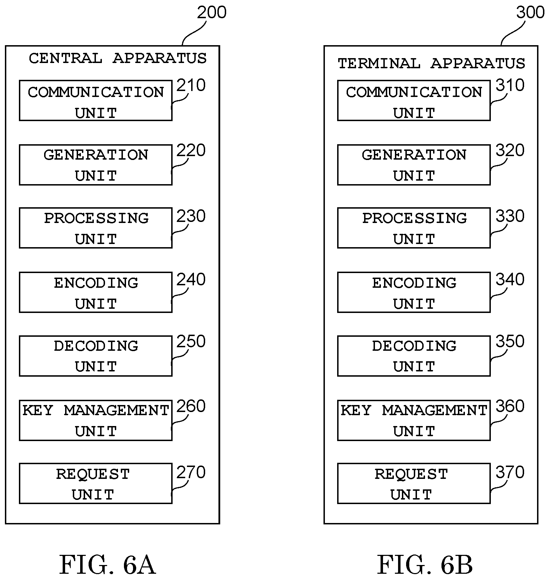

Fig. 6 is a block diagram illustrating a schematic configuration of the central apparatus 200 and the terminal apparatus 300 illustrated in Fig. 5. Fig. 6A illustrates a configuration of the central apparatus 200, and Fig. 6B illustrates a configuration of the terminal apparatus 300.

The central apparatus 200 illustrated in Fig. 6A includes, in addition to the communication unit 210, the generation unit 220, and the processing unit 230 described above, an encoding unit 240 that encodes information included in a payload in a packet transmitted from the communication unit 210 of the central apparatus 200 by using an encoding key, a decoding unit 250 that decodes encoded information included in a payload in a packet received by the communication unit 210 of the central apparatus 200 by using a decoding key, a key management unit 260 that generates and updates a pair of encoding keys and decoding keys used in the encoding unit 240 and the decoding unit 250, and a request unit 270 that requests latest keys updated by the key management unit 260 of another device or a key management unit 360 described below when the central apparatus 200 is connected to the communication cable 100 as a new device.

The terminal apparatus 300 illustrated in Fig. 6B also has a configuration similar to the configuration of the central apparatus 200, and includes, in addition to the communication unit 310, the generation unit 320, and the processing unit 330 described above, an encoding unit 340 corresponding to the encoding unit 240, a decoding unit 350 corresponding to the decoding unit 250, a key management unit 360 corresponding to the key management unit 260, and a request unit 370 corresponding to the request unit 270.

In the encoding units 240 and 340 and the decoding units 250 and 350, any of a secret key encoding method, a public key encoding method, and a common key encoding method can be adopted. However, in the present embodiment, since the key management units 260 and 360 relatively frequently update the encoding keys and the decoding keys, these are temporary keys. Therefore, it is preferable to reduce the load of the packet communication system by simple concealment rather than increasing the load of the packet communication system by strong concealment.

The key management units 260 and 360 can realize temporary keys by updating generated encoding keys and decoding keys at any timing. Therefore, a timing of updating the temporary keys may be periodic (for example, every one minute) or irregular (10 times on average in arbitrary 10 minutes, or the like), or may be in accordance with a predetermined rule, for example, when it is detected that a pattern indicating information included in a payload of a packet is a predetermined pattern.

A timing at which the request units 270 and 370 of the new devices request latest temporary keys is irrelevant. Therefore, for example, when receiving a packet addressed to the new devices, the request units 270 and 370 of the new devices can request latest temporary keys when transmitting a packet responding to the packet. This enables the new devices to perform packet communication at an early stage.

In the present embodiment, one or two or more groups including the central apparatus 200 and some of the terminal apparatus 300 may be formed. In this case, if a system administrator or the like sets a unique common key for each group in all the devices constituting the group, and all the devices perform encoding and decoding using a common temporary key in the group, it is possible to avoid leakage of information transmitted and received in one group to other groups.

### <Description of Operation of Packet Communication System>

Next, the operation of the packet communication system according to the present embodiment will be described. First, communication operation performed in the original packet communication system, that is, operation performed prior to start of control of control objects until distribution of the temporary keys is completed will be described.

A system administrator or the like assigns a unique common key to the central apparatus 200 and the terminal apparatus 300.

As a result, when packet communication is performed between the central apparatus 200 and the terminal apparatus 300 according to the procedure described in the first embodiment, information included in a payload of a packet is encoded by the encoding units 240 and 340 using the common key at the time of packet transmission, and encoded information included in a payload is decoded by the decoding units 250 and 350 using the common key at the time of packet reception.

Thereafter, in the central apparatus 200, when a temporary key request packet encoded by using the common key and transmitted from the request unit 370 of any one of the terminal apparatus 300 is first received, the key management unit 260 generates a temporary key 1 used in the encoding units 240 and 340 or the decoding units 250 and 350 of the central apparatus 200 and the terminal apparatus 300, and transmits a temporary key distribution packet including the temporary key 1 encoded by the common key in the payload to the terminal apparatus 300.

Similarly, after that, when the temporary key request packet and the temporary key distribution packet are exchanged between all of the other terminal apparatus 300 and the central apparatus 200, packet communication using the temporary key 1 is enabled between the central apparatus 200 and the terminal apparatus 300. Strictly speaking, when the transmission of the temporary key distribution packet to the terminal apparatuses 300A to 300D is completed and a packet is returned from the terminal apparatuses 300A to 300D, the distribution of the temporary key 1 is completed.

Therefore, the central apparatus 200 can encrypt information included in the payload of the packet from the transmission of the packet of a next cycle, at the shortest, by using the temporary key 1 for which distribution is completed.

Note that, in a case where the temporary key 1 is updated to a temporary key 2 by the key management unit 260, a temporary key distribution packet including the temporary key 2 encoded by the temporary key 1 in the payload is transmitted to the terminal apparatuses 300A to 300D, and distribution of the temporary key 2 is completed when packets are returned from the terminal apparatuses 300A to 300D.

Similarly thereafter, when a temporary key n is updated to a temporary key n + 1 by the key management unit 260, a temporary key distribution packet including the temporary key n + 1 encoded by the temporary key n in the payload is transmitted to the terminal apparatuses 300A to 300D, and distribution of the temporary key n + 1 is completed when packets are returned from the terminal apparatuses 300A to 300D.

Next, as described in the second embodiment, for example, it is assumed that it is necessary to change the terminal apparatus 300C to the new terminal apparatus 300C'. Therefore, when the terminal apparatus 300C is removed from the communication cable 100 and the new terminal apparatus 300C' is connected to the communication cable 100, a system administrator or the like sets the common key described above to the new terminal apparatus 300C' prior to this connection.

Thereafter, when actually connected to the communication cable 100, before transmitting a setting information request packet, the new terminal apparatus 300C' transmits a temporary key request packet encoded by using the common key, and receives a temporary key distribution packet that is transmitted from the central apparatus 200 and that includes a currently used temporary key encoded by the common key in a payload.

As a result, when the setting information request packet is transmitted, the setting information request packet encoded by using the received temporary key currently in use can be transmitted, so that a setting information response packet can be received. Therefore, similarly to the other terminal apparatuses 300A, 300B, and 300D, encoded information can be transmitted and received to and from the central apparatus 200.

Next, operation in a case where a first group is formed among three devices of the central apparatus 200A and the terminal apparatuses 300A to 300B illustrated in Fig. 5 and a second group is formed among three devices of the central apparatus 200B and the terminal apparatuses 300C to 300D will be described.

In this case, a system administrator or the like only needs to set unique first and second group common keys in advance for each of the first and the second groups. Then, as described above, first and second group temporary keys only need to be distributed from the central apparatuses 200A and 200B to all the terminal apparatuses belonging to the first and the second groups, respectively.

Therefore, in this case, instead of performing encoding and decoding with a set of temporary keys in the entire packet communication system, encoding and decoding are performed with two sets of temporary keys of the first group temporary key and the second group temporary key in the entire packet communication system.

Here, in a case where one of the central apparatus 200 is stopped, it is also a method that the other of the central apparatus 200 can continue to control the control objects on behalf of the stopped one of the central apparatus 200 through the terminal apparatuses of the other. In this case, the first and the second group common keys and the first and the second group temporary keys only need to be exchanged between the central apparatus 200A and the central apparatus 200B.

Note that the exchange of the first and the second group common keys and the first and the second group temporary keys may be performed directly between the central apparatus 200A and the central apparatus 200B, or may be performed indirectly via a host apparatus.

Then, for example, even if the central apparatus 200B is stopped, in the first group, it is possible to continuously transmit and receive information encoded by using the first group temporary key between the central apparatus 200A and the terminal apparatuses 300A to 300B, and in addition, in the second group, it is possible for the central apparatus 200A instead of the stopped central apparatus 200B to transmit and receive information encoded by using the second group temporary key between the central apparatus 200A and the terminal apparatuses 300C to 300D.

Therefore, in the central apparatus 200, correspondence relationships such as
the period (1-1) and the first group,
the period (2-1) and the first group,
the period (3-1) and the second group, and
the period (4-1) and the second group are set in the encoding unit 240.

Note that, in the above example, as described in the second embodiment, for example, if any of the terminal apparatuses 300C to 300D includes the storage unit 232 that stores the setting information, the central apparatus 200A can acquire the setting information from the storage unit 232 as necessary.

Therefore, if acquiring control programs for control objects 400C to 400D connected to the terminal apparatuses 300C to 300D included in the setting information, the central apparatus 200A can perform appropriate stop control or the like on the control objects 400C to 400D based on the control programs.

Furthermore, if the central apparatus 200A also acquires log information of the control objects 400C to 400D connected to the terminal apparatuses 300C to 300D included in the setting information, the control can be continued without performing stop control on the control objects 400C to 400D.

Note that, in a case where any of the terminal apparatuses 300C to 300D does not include the storage unit 232 in which the setting information is stored, the central apparatus 200A only needs to continue the control of the terminal apparatuses 300C to 300D according to an instruction from a host apparatus.

As described above, the packet communication system according to the present embodiment can encrypt information to be communicated between the central apparatus 200 and the terminal apparatus 300, and even when a new terminal apparatus is connected to the communication cable 100, can communicate concealed information without manual intervention in all of the new terminal apparatus and the central apparatus 200 and the terminal apparatus 300 that are existing, connected to the communication cable 100. Examples

### (First Example)

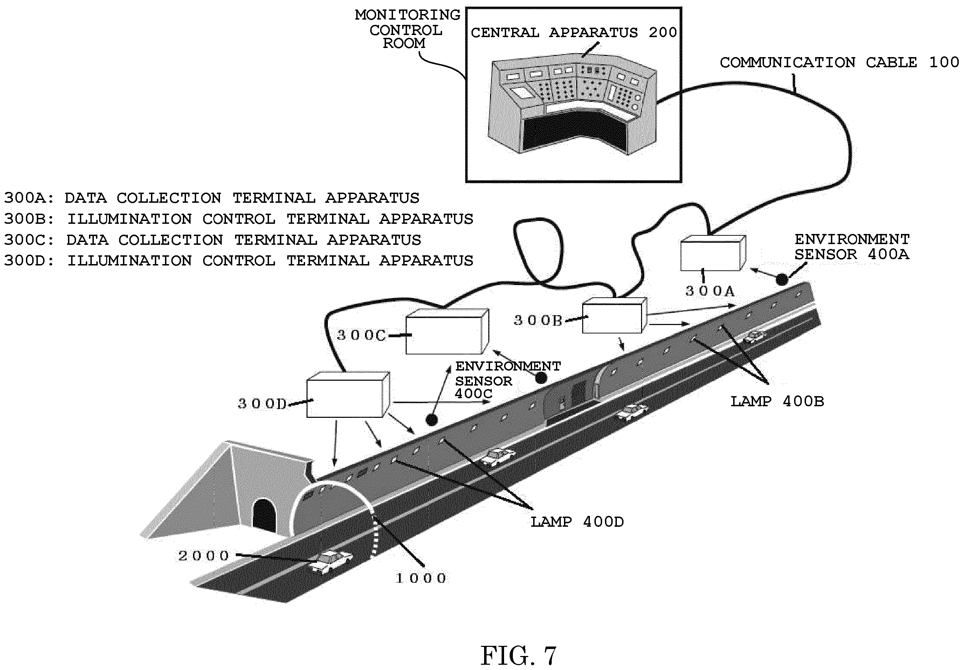

Fig. 7 is an explanatory diagram of an infrastructure system according to a first example of the present invention. The present example will describe an example in which the packet communication system described in the first to third embodiments is applied to a road facility that is an infrastructure system.

In Fig. 7, parts similar to those illustrated in Fig. 1 and the like are denoted by the same reference numerals, and a tunnel 1000 and a vehicle 2000 passing through the tunnel are components original in Fig. 7.

The length of the communication cable 100 is determined according to the length of the tunnel 1000. It is not uncommon that the tunnel 1000 has a length of several hundred meters to several kilometers. For this reason, the length of the communication cable 100 is also several hundred meters or more.

The central apparatus 200 is installed in a monitoring control room where a monitoring person or the like monitors the situation in the tunnel 1000. The host apparatus described above may be provided in the monitoring control room or may be provided in another place.

The terminal apparatuses 300A and 300C are respectively connected to environment sensors 400A and 400C that collect environment data in the tunnel 1000. Examples of the environmental data in the tunnel 1000 include, but are limited thereto, various types of data such as the traffic volume of the vehicle 2000, the exhaust gas concentration in the tunnel 1000, and the amount of light of the lamps 400B and 400D, which will be described below.

The terminal apparatuses 300B and 300D are respectively connected to lamps 400B and 400D installed near the ceiling of the tunnel 1000. The terminal apparatuses 300B and 300D execute illumination control such as the amount of light of the lamps 400B and 400D on the basis of the detection results of the environment sensors 400A and 400C.

The infrastructure system of the present example can improve the environment in the tunnel 1000 and enhance the traveling comfort of the vehicle. That is, for example, in a case where the lamps 400B and 400D are turned off at the end of their lives, the environment sensors 400A and 400C can detect that the light reception intensity has decreased, so that the data collection terminal apparatuses 300A and 300C can transmit the detection result to the central apparatus 200 via the communication cable 100.

As a result, the monitoring person in the monitoring control room can perform the operation of replacing the lamps 400B and 400D, and can prevent the inside of the tunnel 1000 from becoming dark by increasing the amount of light of lamps around the lamp at the end of its life.

In addition, in a case where it is detected that the vehicle 2000 is not present in the tunnel 1000 as the environment data, energy saving can be achieved by reducing the amount of light of the lamps 400B and 400D.

Although not illustrated in Fig. 7, the vehicle 2000 also includes various control objects. Specifically, engine control when an accelerator is depressed, temperature control of an air conditioner called a car air conditioner, and the like are provided. Consequently, the packet communication system described above can also be applied to the vehicle 2000 itself.

Further, the application example of the packet communication system has been described in the present example by taking the road facility as an example, but the application example is not limited thereto, and the packet communication system can be applied to various infrastructure systems as described below.

For example, in a river facility including a dam or a bridge, opening and closing of a gate 400 is controlled on the basis of the detection result of a water level sensor 400.

For example, in a railway and a railway facility, control is executed such that a train makes an emergency stop on the basis of the detection result of an infrared sensor 400 that a passenger has fallen from a platform of a station to a track, or opening and closing of a platform door is controlled by attaching a human sensor 400 near the platform door installed on the platform of the station.

For example, in an airplane and an airport facility, an amount of outflow of oil is controlled on the basis of the detection result of a hydraulic sensor 400 in the airplane, or the amount of light of a runway guide lamp 400 is controlled on the basis of the detection result of an illuminance sensor 400 installed on a runway of the airport.

For example, in a vehicle facility including a ship and a harbor facility, the angle of a rudder is controlled on the basis of the detection result of rudder steering by a steerer, or the amount of movement on a rail is controlled according to the loading and unloading operation of an operator of a gantry crane.

As described above, the infrastructure system of the present example can be applied to a wide variety of facilities from a small-scale facility to a large-scale facility as long as it executes electrical control.

### (Second Example)

Fig. 8 is an explanatory diagram of a factory automation system according to a second example of the present invention. The present example will describe an example in which the packet communication system described in the first to third embodiments is applied to a robot arm that is factory automation.

Although an example in which the control object 400 is connected to the terminal apparatus 300 is used in the description of each embodiment, Fig. 8 describes an example of the terminal apparatus 300 with a sensor of the control object 400. Note that the illustration of the central apparatus 200 itself is omitted.

Both the terminal apparatus with a pressure sensor 300A and the terminal apparatus with an angle sensor 300B mainly perform detection for controlling the motion of a joint of a robot arm, and transmit the detection result to the central apparatus 200.

The terminal apparatus with a pressure sensor 300A is mainly provided on a finger joint, and is used to control gripping strength when gripping an object, and to control drive torque by detecting a load such as torque or load of a joint. The terminal apparatus with an angle sensor 300B is used to control the angle of a joint.

When the packet communication system described in each embodiment is used, the factory automation system of the present example can perform high-speed packet communication between a relatively large number of terminal apparatuses 300 and the central apparatus 200, so that the manufacturing throughput of a product obtained by using a robot arm can be improved.

Furthermore, the application example of the packet communication system has been described in the present example by taking a robot arm as an example, but the application example is not limited to the robot arm, and for example, the packet communication system can also be applied to the control of the operation of joints of various types of industrial robots, and the control of the movement amount, speed, rotation amount, and the like of a machine tool.

Furthermore, fire detection equipment, air conditioning equipment, and an emergency stop mechanism of a machine tool are often provided in a factory in order to ensure the safety of an operator. The packet communication system can also be applied to various types of control.

As described above, the factory automation system of the present example can be applied to a wide variety of facilities from a small-scale facility to a large-scale facility as long as it executes electrical control.

### (Third Example)

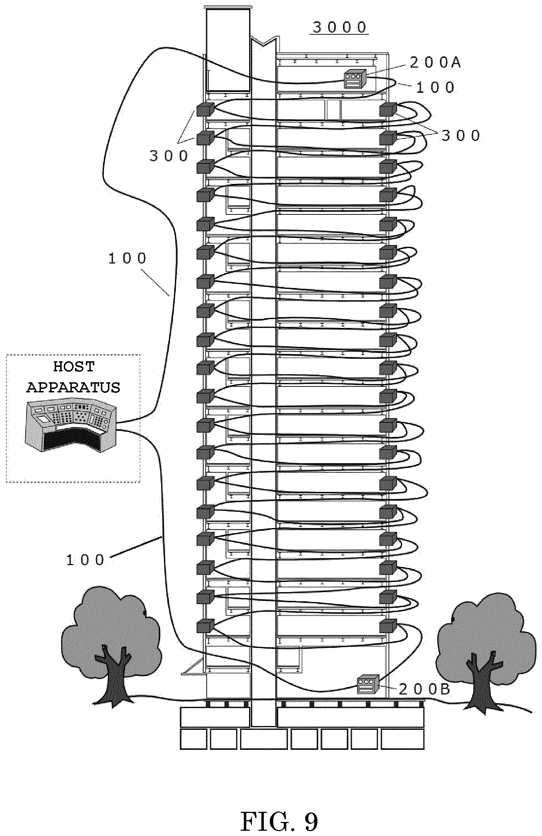

Fig. 9 is an explanatory diagram of a building automation system according to a third example of the present invention. The present example will describe an example in which the packet communication system described in the first to third embodiments is applied to a commercial facility that is a building automation system.

In Fig. 9, parts similar to those illustrated in Fig. 1 and the like are denoted by the same reference numerals, and a commercial facility 3000 such as a department store or a shopping center is a component original in Fig. 7.

Note that the host apparatus and the central apparatuses 200A to 200B can be remotely disposed from each other, and in this case, these devices are connected in a wired or wireless manner through a line different from the communication cable 100 illustrated. The central apparatuses 200A to 200B are installed in a monitoring control room where a monitoring person or the like monitors the situation in the commercial facility 3000.

The terminal apparatus 300 is connected to a control object such as a sensor (not illustrated) that collects various types of data in the commercial facility 3000. Examples of the control object installed in the commercial facility 3000 include an elevator (elevator), a room temperature sensor and an air conditioning facility, a fire detector and a fire alarm, a disaster prevention/crime prevention facility such as an emergency report button and an emergency shutter that is opened in a normal state but closed in an emergency, a human sensor, and a light.

The building automation system of the present example can provide a comfortable space and a safe and secure space in the commercial facility 3000.

Furthermore, the application example of the packet communication system has been described in the present example by taking the commercial facility 3000 as an example. However, the building automation system is not limited to being applied to the commercial facility 3000, and can also be applied to other buildings such as an office building or an apartment building such as a condominium.

As described above, the building automation system of the present example can be applied to a wide variety of facilities from a small-scale facility to a large-scale facility as long as it executes electrical control.

## Claims

1. A communication system comprising, in a packet communication system in which devices including a central apparatus and a plurality of terminal apparatuses are connected to each other in a multi-drop manner,
a storage unit that stores a copy of setting information set in each of the devices;
a detection unit that detects that any one of the devices is replaced; and
a setting unit that sets, based on the copy of the setting information of each of the devices before replacement stored in the storage unit when the detection unit detects replacement of any one of the devices, the setting information in the device after replacement.

2. The communication system according to claim 1, wherein the storage unit is provided in at least one of the central apparatus and the terminal apparatuses.

3. The communication system according to claim 1, wherein the detection unit is provided in at least one of the central apparatus and the terminal apparatuses.

4. The communication system according to claim 1, wherein the setting information includes at least one of a control program for a control object connected to each of the terminal apparatuses, information capable of specifying each of the devices, log information of past operation of each of the devices, and log information of past operation of the control object.

5. The communication system according to claim 1, wherein the device after replacement comprises a control suppression unit that performs control so as not to start outputting information to the control object until setting information is set by the setting unit.

6. The communication system according to claim 1 comprising a reading unit that reads setting information stored in the storage unit.

7. The packet communication system according to claim 1, wherein
the terminal apparatuses comprise:
a first terminal apparatus connected to a first control object; and
a second terminal apparatus connected to a second control object,
the central apparatus inputs information output from the first control object and outputs an instruction based on the information to the second control object, and
the second terminal apparatus is a device that executes, when predetermined information is transmitted from the first terminal apparatus, processing based on the information without waiting for an instruction from the central apparatus.

8. The packet communication system according to claim 7, wherein, when receiving an instruction from the central apparatus after executing processing based on predetermined information transmitted from the first terminal apparatus, the second terminal apparatus returns information indicating that processing based on the information has been executed to the central apparatus.

9. The packet communication system according to claim 1, wherein
the central apparatuses, the number of which is N, and the terminal apparatuses, the number of which is M, are connected to each other in a multi-drop manner on a communication cable,
some of the N central apparatuses and the M terminal apparatuses comprise:
an encoding unit that encodes information included in a payload in a packet to be transmitted by using an encoding key;
a decoding unit that decodes encoded information included in a payload in a received packet by using a decoding key; and
a key management unit that generates and updates an encoding key and a decoding key used in the encoding unit and the decoding unit; wherein,
a device newly connected to the communication cable comprises a request unit that requests an encoding key and a decoding key that are latest, updated by the key management unit.

10. The packet communication system according to claim 9, wherein, when a destination of a received packet is the newly connected device, the request unit requests an encoding key and a decoding key that are latest when transmitting a packet responding to the packet.

11. The packet communication system according to claim 9, wherein, when a plurality of groups to which some of the devices belong is generated, encoding and decoding are performed with different encoding keys and decoding keys for the respective groups.

12. An infrastructure system comprising the packet communication system according to any one of claims 1 to 11.

13. A building automation system comprising the packet communication system according to any one of claims 1 to 11.

14. A factory automation system comprising the packet communication system according to any one of claims 1 to 11.
